(19) Europäisches Patentamt / European Patent Office / Office européen des brevets

(11) EP 3 396 403 A1

(12) # EUROPEAN PATENT APPLICATION
published in accordance with Art. 153(4) EPC

(43) Date of publication:
**31.10.2018 Bulletin 2018/44**

(21) Application number: **16878465.0**

(22) Date of filing: **13.12.2016**

(51) Int Cl.:
***G01S 7/481*** *(2006.01)* ***G01S 17/89*** *(2006.01)*

(86) International application number:
**PCT/JP2016/086979**

(87) International publication number:
**WO 2017/110574 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.12.2015 JP 2015251137**

(71) Applicant: **Konica Minolta, Inc.**
**Tokyo 100-7015 (JP)**

(72) Inventor: **MATSUI, Kazuki**
**Tokyo 100-7015 (JP)**

(74) Representative: **Hoffmann Eitle**
**Patent- und Rechtsanwälte PartmbB**
**Arabellastraße 30**
**81925 München (DE)**

(54) **LIGHT PROJECTION/RECEPTION UNIT, AND RADAR**

(57) A radar capable of preventing detection omission while suppressing cost and having high sensitivity and a light projecting and receiving unit used for the radar are provided. A first light receiving element PX11 and a second light receiving element PX21 are arranged so that an overlapping region PX11b of the first light receiving element PX11 is overlapped with an overlapping region PX21b of the second light receiving element PX21 when the first light receiving element PX11 is relatively shifted in a Y direction relative to the second light receiving element PX21. Accordingly, by obtaining a total value obtained by adding signals respectively output from the first light receiving element PX11 and the second light receiving element PX12 by a control circuit CONT, the outputs in the overlapping regions PX11b and 21b are superimposed. Therefore, if the same reflected light enters a first light receiving element PX13 and a second light receiving element PX23, an output value, which is larger than that in a case where signals of both light receiving elements are added, is obtained, and it is possible to increase object detection sensitivity.

FIG. 3

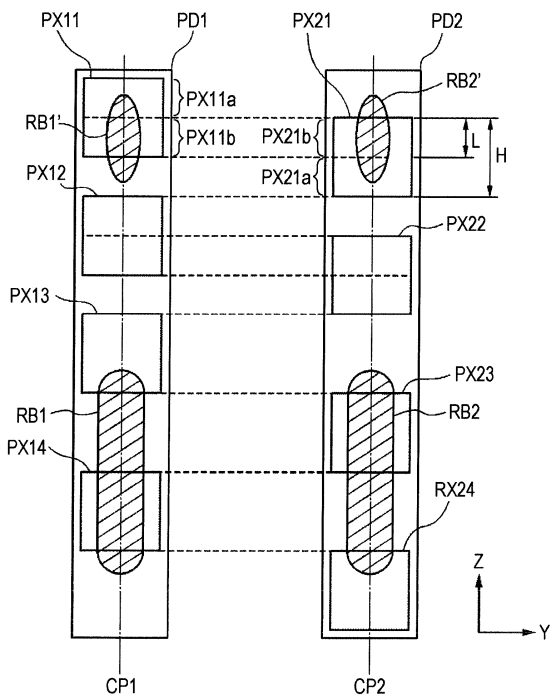


EP 3 396 403 A1

## Description

### Technical Field

The present invention relates to a light projecting and receiving unit suitable for being used in a radar for detecting an object by irradiating the object with a light flux from a light source and a radar.

### Background Art

In recent years, for example, in fields of automobiles and security robots, there is an increasing demand for accurately detecting obstacles in a range where a mobile body travels to prevent a collision of the mobile body. As a method of detecting the obstacle, a radio wave type radar which detects a reflected wave by transmitting radio waves has been proposed. However, from viewpoint of resolution, there is a problem in that it is difficult to accurately grasp a position of a distant object.

Whereas, a laser radar employing a Time of Flight (TOF) method has already been developed. In the TOF method, a distance to the object can be measured by measuring a time until a pulsed laser beam hits the object and returns. However, the laser radar employing the TOF method uses a light receiving element having a high amplification factor such as an avalanche photodiode (APD) in general to detect weak reflected light generated when the distant object is irradiated with the laser beam. Furthermore, to increase the resolution of the object to be detected, the plurality of light receiving elements for receiving the reflected light is arranged to ensure high resolution.

Patent Literature 1 discloses a radar device in which a laser beam is emitted from a light source, a one-dimensional scanner scans the emitted laser beam along a scanning direction, and a light receiving surface of a light detection unit in which four pixels are arranged in a two-dimensional matrix detects reflected light from the object regarding each of the four pixels.

The radar device disclosed in Patent Literature 1 can irradiate a single pixel with the reflected light along the scanning direction by irradiating the laser beam from the light source once and can concurrently emit the reflected light toward the plurality of pixels along a direction perpendicular to the scanning direction. Accordingly, an electric signal larger than that in a case where the reflected light enters a single pixel can be obtained. Therefore, weak reflected light can be detected.

### Citation List

### Patent Literature

Patent Literature 1: JP 2015-78953 A
Patent Literature 2: US 7,969,558

### Summary of Invention

### Technical Problem

However, in the radar device in Patent Literature 1, the four pixels are fixed while the laser beam emitted from the light source is scanned by the one-dimensional scanner. Therefore, since an optical axis of the laser beam emitted from the light source is different from an optical axis of the reflected light of the scanned laser beam, disturbance light other than the reflected light is easily received, and accordingly, this may cause wrong detection. Furthermore, to accurately detect the position of the object, four light receiving elements are independently provided in the four respective pixels. However, it is necessary to secure a certain space between the light receiving elements to provide wiring and the like. When the reflected light enters the space, the electric signal cannot be generated. In addition, the space is provided at the same and corresponding coordinate position in each of the four pixels. Therefore, the radar device in Patent Literature 1 inherently has non-detection zones where the object cannot be detected, and as a result, it is difficult to accurately detect the distant object.

On the other hand, Patent Literature 2 discloses an optical measuring device which can receive all reflected light from an object of laser beams emitted from light sources by corresponding light receiving elements by rotating a unit in which a large number of light sources and the light receiving elements as many as the light sources are two-dimensionally arranged. The optical measuring device has an advantage such that since the reflected light of the scanned laser beam is detected by the corresponding light receiving element, disturbance light other than the reflected light is hardly received.

However, in the optical measuring device in Patent Literature 2, cost is increased by providing a large number of light sources and light receiving elements, and it is physically difficult to completely fill the space between the light sources. Therefore, there is a high possibility such that the laser beam irradiated to the object is locally omitted, and this causes the detection omission. In addition, since the reflected light from the object is extremely weak, there is a demand for increasing sensitivity of the signals output from the light receiving elements while preventing the detection omission.

The present invention has been made in view of such problems. An object of the present invention is to provide a radar capable of preventing detection omission while suppressing cost and having high sensitivity and a light projecting and receiving unit used for the radar.

### Solution to Problem

To achieve at least one of the objects, a light projecting and receiving unit reflecting one aspect of the present invention includes
a light source,

a light projecting optical system which emits a light flux emitted from the light source toward an object,
a scanning mechanism which drives the light projecting optical system and scans the light flux emitted from light projecting optical system,
a first light receiver which receives a first reflected light flux which is a light flux reflected by the object, and
a second light receiver which receives a second reflected light flux reflected from the object concurrently to the first reflected light flux, in which
the first light receiver and the second light receiver are arranged apart from each other in a second direction corresponding to a direction in which the light flux emitted from the light projecting optical system is scanned,
the first light receiver includes a plurality of first light receiving elements arranged along a first direction orthogonal to the second direction with intervals,
the second light receiver includes a plurality of second light receiving elements arranged along the first direction with intervals, and
the first light receiving elements and the second light receiving elements, which are arranged so that a part of the first light receiving elements is overlapped with the part of the second light receiving elements when the first light receiving elements are relatively shifted in the second direction relative to the second light receiving elements, are associated with each other, and the object is detected based on a total value obtained by adding signals respectively output from the first light receiving element and the second light receiving elements associated with each other.

To achieve at least one of the objects, another light projecting and receiving unit reflecting one aspect of the present invention includes,
a light source,
a light projecting optical system which emits a light flux emitted from the light source toward an object,
a scanning mechanism which drives the light projecting optical system and scans the light flux emitted from light projecting optical system,
a light receiving optical system into which a reflected light flux which is a light flux reflected from the object enters,
a branching part including a branch surface which transmits a part of the reflected light flux collected by the light receiving optical system as a first light flux and reflects the remaining reflected light flux as a second light flux,
a first light receiver which receives the first light flux, and
a second light receiver which receives the second light flux, in which
the first light receiver includes a plurality of first light receiving elements arranged along a first direction orthogonal to a second direction corresponding to a direction in which a light flux emitted from the light projecting optical system is scanned with intervals,
the second light receiver includes a plurality of second light receiving elements arranged along the first direction with intervals,
the first light receiving element and the second light receiving element, which are arranged so that a part of a projected image of the first light receiving element is overlapped with a part of a projected image of the second light receiving element when the first light receiving element is projected on the branch surface along the first light flux and the second light receiving element is projected on the branch surface along the second light flux, are associated with each other, and the object is detected based on a total value obtained by adding signals respectively output from the first light receiving element and the second light receiving element associated with each other.

## Advantageous Effects of Invention

According to the present invention, it is possible to provide a radar capable of preventing detection omission while suppressing cost and having high sensitivity and a light projecting and receiving unit used for the same.

## Brief Description of Drawings

Fig. 1 is a schematic diagram of a state where a laser radar, on which a light projecting and receiving unit is mounted, is mounted on a vehicle according to the present embodiment.
Fig. 2 is a schematic configuration diagram of a laser radar LR according to the present embodiment.
Fig. 3 is a schematic diagram of light receiving surfaces of a first light receiver PD1 and a second light receiver PD2 and illustrates a state where reflected light enters.
Fig. 4 is a view of an arrangement of components when the light projecting and receiving unit is viewed in a direction of a rotation axis line RO.
Fig. 5 is a diagram of a target area to be scanned by the laser radar LR.
Fig. 6 is a perspective view of a laser radar LR including a light projecting and receiving unit according to another embodiment.
Fig. 7 is diagram of a state where a screen G which is a detection range of the laser radar LR is scanned with a collimated luminous flux LB to be emitted (indicating by hatching) according to a rotation of a mirror unit MU.
Fig. 8 is a perspective view of a laser radar LR including a light projecting and receiving unit according to still another embodiment.
Fig. 9 is a diagram of an arrangement state of first light receiving elements PX11 to PX14 and second light receiving elements PX21 to PX24 according to a comparative example.
Fig. 10 is a diagram in which a vertical axis indicates sensor sensitivity of the comparative example and a horizontal axis indicates a position in a Z direction when it is assumed that an end of the first light receiving element PX11 be an origin and a light receiving element size along the Z direction be one.

Fig. 11(a) is a graph in a case where the vertical axis indicates an addition value of signals of the first light receiving element and the second light receiving element and the horizontal axis indicates positions in the Z direction where reflected light RB1 and RB2 as large as the light receiving element size enters when the end of the first light receiving element PX11 is an origin and the light receiving element size in the Z direction is one in the comparative example. Fig. 11(b) is a diagram of a state where the reflected light RB1 and RB2 as large as the light receiving element size enters an original point in the Z direction in an arrangement according to the comparative example.

Fig. 12(a) is a graph in a case where the vertical axis indicates an addition value of signals of the first light receiving element and the second light receiving element and the horizontal axis indicates positions in the Z direction where reflected light RB1 and RB2 0.6 times as large as the light receiving element size enters when the end of the first light receiving element PX11 is an origin and the light receiving element size in the Z direction is one in the comparative example. Fig. 12(b) is a diagram of a state where the reflected light RB1 and RB2 0.6 times as large as the light receiving element size enters an original point in the Z direction in an arrangement according to the comparative example.

Fig. 13 is a diagram of an arrangement state of first light receiving elements PX11 to PX14 and second light receiving elements PX21 to PX24 according to an example.

Fig. 14 is a diagram in which a vertical axis indicates sensor sensitivity of the example and a horizontal axis indicates a position in a Z direction when it is assumed that an end of the first light receiving element PX11 be an origin and a light receiving element size along the Z direction be one.

Fig. 15(a) is a graph in a case where the vertical axis indicates an addition value of signals of the first light receiving element and the second light receiving element and the horizontal axis indicates positions in the Z direction where reflected light RB1 and RB2 as large as the light receiving element size enters when the end of the first light receiving element PX11 is an origin and the light receiving element size in the Z direction is one in the example. Fig. 15(b) is a diagram of a state where the reflected light RB1 and RB2 as large as the light receiving element size enters an original point in the Z direction in an arrangement according to the example.

Fig. 16(a) is a graph in a case where the vertical axis indicates an addition value of signals of the first light receiving element and the second light receiving element and the horizontal axis indicates positions in the Z direction where reflected light RB1 and RB2 0.6 times as large as the light receiving element size enters when the end of the first light receiving element PX11 is an origin and the light receiving element size in the Z direction is one in the example. Fig. 16(b) is a diagram of a state where the reflected light RB1 and RB2 0.6 times as large as the light receiving element size enters an original point in the Z direction in an arrangement according to the example.

Description of Embodiments

Hereinafter, embodiments of the present invention will be described with reference to the accompanying drawings. Fig. 1 is a schematic diagram of a state where a laser radar, on which a light projecting and receiving unit is mounted, is mounted on a vehicle according to the present embodiment. A laser radar LR according to the present embodiment is provided behind a front window 1a of a vehicle 1 or behind a front grill 1b.

Fig. 2 is a schematic configuration diagram of the laser radar LR according to the present embodiment. The laser radar LR has a motor MT attached to a vehicle body of the vehicle 1 and a casing CS attached to a front end of a rotation shaft SFT of the motor MT. The casing CS is rotatable around a rotation axis line RO together with the rotation shaft SFT. The rotation axis line RO extends along the vertical direction. However, an actual direction of the rotation axis line RO changes according to an inclination of the vehicle body. Here, it is assumed that a direction of the rotation axis line RO be a Z direction, an optical axis direction of a semiconductor laser LD to be described later be an X direction, and a direction orthogonal to the Z direction and the X direction be a Y direction.

In the casing CS, as the light projecting and receiving unit, the semiconductor laser (light source) LD for emitting a pulse laser beam, a collimator lens (light projecting optical system) CL which converts divergent light from the semiconductor laser LD into a collimated luminous flux, a first lens (first light receiving optical system) LS1 which collects a reflected light flux (first reflected light flux) from a scanned and projected object OBJ, a first light receiver PD1 which receives the light collected by the first lens LS1, a second lens (second light receiving optical system) LS2 which is arranged on the opposite side of the first lens LS1 having the collimator lens CL therebetween and collects another reflected light flux (second reflected light flux) from the object OBJ, a second light receiver PD2 which receives the light collected by the second lens LS2, and a control circuit CONT as a processor are arranged. These components are rotated around the rotation axis line RO together with the casing CS. The semiconductor laser LD, the first light receiver PD1, and the second light receiver PD2 are connected to the control circuit CONT so as to transmit signals through a wiring HS.

In the present embodiment, a laser beam emitted from the semiconductor laser LD passes through an aperture diaphragm, a beam shaper, and the like (not shown) so that a size A of the collimated luminous flux along the vertical direction relative to the central axis (scanning orthogonal direction to be described later) is longer than a size B along the horizontal direction (scanning direction to be described later) orthogonal to the same at least in a cross section of the collimated luminous flux LB entering the object OBJ (indicated by hatching in Fig. 1). With the rotation of the casing CS, the collimated luminous flux LB rotates in a XY plane and changes an emission direction. It is assumed that a direction in which the collimated luminous flux LB rotates and moves be a scanning direction (second direction) and a direction orthogonal to the scanning direction (that is, Z direction: first direction) be a scanning orthogonal direction. That is, the motor MT includes a scanning mechanism for rotating and driving the casing CS, and the scanning mechanism integrally rotates the semiconductor laser (light source) LD, the collimator lens (light projecting optical system) CL, the first lens (first light receiving optical system) LS1, the first light receiver PD1, the second lens (second light receiving optical system) LS2, and the second light receiver PD2 around an axis along the scanning direction (second direction) so as to scan the object OBJ with the collimated luminous flux LB.

Fig. 3 is a schematic diagram of light receiving surfaces of the first light receiver PD1 and the second light receiver PD2, and in Fig. 3, the Z direction is indicated as the vertical direction. The first light receiver PD1 includes a plurality of first light receiving elements PX11 to PX14 arranged along the Z direction on the light receiving surface facing toward the first lens LS1, and the second light receiver PD2 includes a plurality of second light receiving elements PX21 to PX24 arranged along the Z direction. The first light receiver PD1 other than the first light receiving elements PX11 to PX14 is a non-detection region, and the second light receiver PD2 other than the second light receiving elements PX21 to PX24 is a non-detection region. In the non-detection regions, wirings and the like are provided.

Each of the first light receiving elements PX11 to PX14 and the second light receiving elements PX21 to PX24 receives the light flux and outputs a signal and has the same rectangular shape (for example, length along Z direction is 0.1 mm). The first light receiving elements PX11 to PX14 and the second light receiving elements PX21 to PX24 are arranged in a zigzag form as illustrated in Fig. 3. Here, positions of lower edges of the first light receiving elements PX11 and PX12 in the Z direction are respectively lower than upper edges of the second light receiving elements PX21 and PX22 which are respectively closest to the first light receiving elements PX11 and PX12. Positions of lower edges of the first light receiving elements PX13 and PX14 in the Z direction respectively coincide with upper edges of the second light receiving elements PX23 and PX24 which are respectively closest to the first light receiving elements PX13 and PX14. Furthermore, positions of lower edges of the second light receiving elements PX21 to PX23 respectively coincide with upper edges of the first light receiving elements PX12 to PX14 which are respectively closest to the second light receiving elements PX21 to PX23.

That is, when the first light receiving elements PX11 and PX12 are shifted in the Y direction (second direction) relative to the second light receiving elements PX21 and PX22, the light receiving elements are partially overlapped with each other. However, even if the first light receiving elements PX13 and PX14 are shifted to the Y direction (second direction) relative to the second light receiving elements PX23 and PX24, the light receiving elements do not partially overlapped with each other, and edges of the light receiving elements have contact with each other. A center line (arrangement center) of the first light receiving elements PX11 to PX14 is referred to as CP1, and a center line (arrangement center) of the second light receiving elements PX21 to PX24 is referred to as CP2. The first light receiving elements and the second light receiving elements may be arranged so that all the first light receiving elements and all the second light receiving elements are overlapped with each other by a shift in the Y direction.

When the first light receiving elements PX11 and PX12 are relatively shifted to the Y direction relative to the second light receiving elements PX21 and PX22 and the first light receiving elements PX11 and PX12 are overlapped with the second light receiving elements PX21 and PX22, sensitivity can be increased by satisfying the following formula.

$$L/H > 0.5 \quad (1)$$

where,

L: overlapping amount of the first light receiving element and the second light receiving element in the Z direction
H: length of the first light receiving element or the second light receiving element in the Z direction

Fig. 4 is a view of an arrangement of components when the light projecting and receiving unit is viewed in a direction of the rotation axis line RO. As illustrated in Fig. 4, the arrangement center CP1 of the first light receiving elements PX11 to PX14 is shifted to a side apart from the second light receiver PD2 along the Y direction relative to an optical axis OA1 of the first lens LS1. More preferably, the arrangement center CP1 is shifted in a degree with which a reflected light flux entering along the optical axis OA1 of the first lens LS1 can be detected near the second light receiver PD2 side edge of the first light receiving elements PX11 to PX14.

The arrangement center CP2 of the second light receiving elements PX21 to PX24 is shifted to a side apart from the first light receiver PD1 along the Y direction relative to an optical axis OA2 of the second lens LS2. More preferably, the arrangement center CP2 is shifted in a degree with which a reflected light flux entering along the optical axis OA2 of the second lens LS2 can be detected near the first light receiver PD1 side edge of the second light receiving elements PX21 to PX24. It is sufficient if at least one of the arrangement centers CP1 and CP2 is shifted.

The reason why the center CP1 of the first light receiving elements PX11 to PX14 and the center CP2 of the second light receiving elements PX21 to PX24 are shifted in this way will be described. In Fig. 4, since reflected light reflected from a distant object enters the first lens LS1 and the second lens LS2 as indicated by solid lines, respective focusing positions are positioned on the optical axes OA1 and OA2. On the other hand, reflected light reflected from a close object obliquely enters the first lens LS1 and the second lens LS2 as indicated by alternate long and short dash lines because of a parallax. Therefore, respective focusing positions are positioned outside of the optical axes OA1 and OA2 in the Y direction. That is, in the first light receiving elements PX11 to PX14 and the second light receiving elements PX21 to PX24, an inner region from the optical axes OA1 and OA2 in the Y direction is not needed to detect the reflected light from the object at the close position to the object at an infinite distant place. Therefore, by shifting the center CP1 of the first light receiving elements PX11 to PX14 and the center CP2 of the second light receiving elements PX21 to PX24 outward in the Y direction relative to the respective optical axes OA1 and OA2, cost of the light receiving units PD1 and PD2 can be reduced, and the light receiving units PD1 and PD2 can be effectively used.

Next, a distance measuring operation of the laser radar LR will be described. In Fig. 1, it is assumed that the control circuit CONT knows a light emission timing of the semiconductor laser LD. The divergent light intermittently emitted from the semiconductor laser LD in a pulsed manner is converted into the collimated luminous flux LB by the collimator lens CL and is irradiated toward the object. Here, since the casing CS is rotated around the rotation axis line RO by the motor MT, the collimated luminous flux LB is scanned over 360° in the horizontal direction in an external world where the object exists (refer to Fig. 5) according to the rotation of the casing CS. Since the collimated luminous flux LB has a vertically elongated shape in the scanning orthogonal direction (vertical direction), a field of view in the vertical direction can be secured, and many objects can be detected by one scan.

When the object OBJ is irradiated with the collimated luminous flux LB, diffused light is generated from the same incident point on the object OBJ. In other words, a plurality of reflected light beams is generated from the incident point. Therefore, the first light receiver PD1 receives a part of the reflected light (first reflected light flux), and the second light receiver PD2 receives another part of the reflected light (second reflected light flux). Signals generated by receiving the light are transmitted from the first light receiver PD1 and the second light receiver PD2 to the control circuit CONT, and the control circuit CONT measures a distance to the object based on a difference between a light emission time of the semiconductor laser LD and light reception times of the first light receiver PD1 and the second light receiver PD2.

The reflected light fluxes RB1 and RB2 concurrently generated from the object which has received the collimated luminous flux LB are respectively received by the first light receiver PD1 and the second light receiver PD2. For example, as illustrated in Fig. 3, when it is assumed that the reflected light flux RB1 enter across the light receiving elements PX13 and PX14 and that the reflected light flux RB2 enter across the light receiving elements PX23 and PX24, the light receiving elements are arranged so that the upper and lower edges of the light receiving elements have contact with each other (that is, not overlapped with each other) by relatively shifting the light receiving elements in the Y direction. Therefore, a component of the reflected light flux RB1 which has entered the non-detection region (other than light receiving element) of the first light receiver PD1 can be detected by the second light receiving elements PX23 and PX24 of the second light receiver PD2 as a component of the reflected light flux RB2 corresponding to the component of the reflected light flux RB1. In addition, a component of the reflected light flux RB2 which has entered the non-detection region (other than light receiving element) of the second light receiver PD2 can be detected by the first light receiving elements PX13 and PX14 of the first light receiver PD1 as the component of the reflected light flux RB1 corresponding to the component of the reflected light flux RB2. Accordingly, the control circuit CONT independently compares signals from the light receiving elements PX13, PX14, PX23, and PX24 with respective thresholds (second threshold) and determines that the reflected light from the object has entered in a case where the signal is equal to or more than the threshold. In addition, the size of the object can be estimated from the number of continuous light receiving elements which have detected the reflected light flux.

By the way, in a case of a vehicle-mounted laser radar as illustrated in Fig. 1, there have been requests such that an object existing below the horizontal line is detected with a high resolution to prevent a collision in advance, and an object existing above the horizontal line is detected as early as possible by increasing sensitivity of the light receiving elements. To respond to the requests, in the present embodiment, the first light receiving elements PX11 and PX12 and the second light receiving elements PX21 and PX22 detect the object existing above the horizontal line, and the first light receiving elements PX13 and PX14 and the second light receiving elements PX23 and PX24 detect the object existing below the horizontal line.

More specifically, when the first light receiving elements PX11 and PX12 are relatively shifted in the Y direction (second direction) relative to the second light receiving elements PX21 and PX22, the first light receiving elements PX11 and PX12 are partially overlapped with the respective second light receiving elements PX21 and PX22. At this time, the control circuit CONT, which is a processor, associates the first light receiving element PX11 and the second light receiving element PX21 overlapped with each other and associates the first light receiving element PX12 and the second light receiving element PX22 overlapped with each other to obtain a total value obtained by adding the signals output from the first light receiving element and the second light receiving element associated with each other. Then, an object is detected based on the obtained total value.

Here, the first light receiving element PX11 and the second light receiving element PX21 closest thereto will be described as an example. When the first light receiving element PX11 is relatively shifted to the Y direction relative to the second light receiving element PX21 and the first light receiving element PX11 and the second light receiving element PX21 are overlapped with each other, sensitivity can be increased by satisfying the following formula.

$$L/H > 0.5 \quad (1)$$

where,

L: overlapping amount of the first light receiving element PX11 and the second light receiving element PX21 in the Z direction

H: length of the first light receiving element PX11 or the second light receiving element PX21 in the Z direction

In Fig. 3, a non-overlapping region in the first light receiving element PX11 where light receiving regions are not overlapped caused by the shift in the Y direction is referred to as PX11a, an overlapping region in the first light receiving element PX11 where the light receiving regions are overlapped with each other is referred to as PX11b. A non-overlapping region in the second light receiving element PX21 where the light receiving regions are not overlapped is referred to as PX21a, and an overlapping region in the second light receiving element PX21 where the light receiving regions are overlapped with each other is referred to as PX21b. Here, first reflected light RB1' from the object illustrated in Fig. 3 extends off the first light receiving element PX11 of the first light receiver PD1 to the non-detection region. However, a component of second reflected light RB2' corresponding to the extended portion can be detected in the non-overlapping region PX21a in the second light receiving element PX21 of the second light receiver PD2. Therefore, even when the first reflected light flux RB1' extends off the first light receiving element PX11, the component of the second reflected light flux RB2' corresponding to the extended portion can be detected in the non-overlapping region PX21a in the second light receiving element PX21. Therefore, detection omission can be prevented by providing only the non-overlapping region PX21a.

However, since the reflected light from the distant object is weak, it is desired to increase the sensitivity as possible. Therefore, in the present embodiment, when the first light receiving element PX11 is relatively shifted in the Y direction relative to the second light receiving element PX21, the overlapping region PX11b in the first light receiving element PX11 is arranged to be overlapped with the overlapping region PX21b of the second light receiving element PX21. With this arrangement, the control circuit CONT obtains the total value obtained by adding the signals output from the first light receiving element PX11 and the second light receiving element PX12 to superimpose the outputs of the overlapping regions PX11b and 21b. The total value becomes a signal value larger than a simply added value of signals of the first light receiving element PX13 and the second light receiving element PX23 when it is assumed that the same reflected light enter the both light receiving elements which do not have an overlapping region. Therefore, this can increase the sensitivity. A relation between the first light receiving element PX12 and the second light receiving element PX22 is similar to the above. At this time, the control circuit CONT compares a first threshold (when value is equal to or more than this value, it is determined that the object is detected) with the total value. The first threshold is larger than the second threshold which is compared with the signals from the light receiving elements PX13, PX14, PX23, and PX24 which are independent light receiving elements, and the first threshold is smaller than twice of the second threshold.

According to the present embodiment, the light receiving elements are arranged so that the first light receiving elements PX11 and PX12 are respectively overlapped with the second light receiving elements PX21 and PX22 when the first light receiving elements PX11 and PX12 are relatively shifted in the Y direction relative to the second light receiving elements PX21 and PX22 so as to increase the sensitivity to detect the object above the horizontal line. On the other hand, by arranging the first light receiving elements PX13 and PX14 and the second light receiving elements PX23 and PX24 so as not to be respectively overlapped with each other when the first light receiving elements PX13 and PX14 are relatively shifted in the Y direction relative to the second light receiving elements PX23 and PX24, the resolution to the object below the horizontal line can be improved. Regardless of the above, the light receiving elements may be arranged so that the first light receiving elements are overlapped with the second light receiving elements when all the first light receiving elements are relatively shifted in the Y direction relative to the second light receiving elements. Furthermore, the number of light receiving elements is not limited to four.

Fig. 6 is a perspective view of a laser radar LR including a light projecting and receiving unit according to another embodiment. Here, the control circuit and the like are omitted. In Fig. 6, the light projecting and receiving unit of the laser radar LR includes a semiconductor laser (light source) LD for emitting a pulse laser beam, a collimator lens (light projecting optical system) CL which converts divergent light from the semiconductor laser LD into a collimated luminous flux, a first lens (first light receiving optical system) LS1 which collects a reflected light flux (first reflected light flux) from a scanned and projected object OBJ, a first light receiver PD1 which receives the light collected by the first lens LS1, a second lens (second light receiving optical system) LS2 which is arranged on the opposite side of the first lens LS1 having an optical axis of the collimator lens CL therebetween and collects another reflected light flux (second reflected light flux) from the object OBJ, a second light receiver PD2 which receives the light collected by the second lens LS2, and a mirror unit MU which rotates. Here, it is assumed that a direction of a rotation axis line RO of the mirror unit MU be a Z direction, an optical axis direction of the semiconductor laser LD be an X direction, and a direction orthogonal to the Z direction and the X direction be a Y direction. In a case where the reflected light flux is reflected by a mirror and enters the first light receiver and the second light receiver, the scanning direction does not coincide with the second direction, and/or it is possible that the scanning orthogonal direction does not coincide with a first direction. However, even in this case, association is performed.

The semiconductor laser LD and the collimator lens CL form a light projecting system LPS, the first lens LS1 and the first light receiver PD1 form a first light receiving system RPS1, and the second lens LS2 and the second light receiver PD2 form a second light receiving system RPS2. The first light receiver PD1 and the second light receiver PD2 have similar structures to those in the above embodiment. A length of a light flux emitted from the light projecting system LPS in a sub scanning angle direction is longer than that in a scanning angle direction in a measurement range of the object.

The mirror unit MU having a substantially square cylindrical shape is held to be rotatable around the rotation axis line RO which is an axis line. Four trapezoidal first mirror surfaces M1 are arranged on the lower outer circumference, and four trapezoidal second mirror surfaces M2 are arranged on the upper outer circumference as facing to the respective first mirror surfaces M1. Intersection angles between the first mirror surfaces M1 and the second mirror surfaces M2 which are vertically paired are different from each other. The optical axis of the light projecting system LPS is orthogonal to the rotation axis line RO of the mirror unit MU, and the optical axes of the first light receiving system RPS1 and the second light receiving system RPS2 are provided in parallel to the optical axis of the light projecting system LPS provided therebetween. That is, a scanning mechanism including a motor (not shown) and the like integrally rotates the mirror unit MU around an axis along the second direction to scan the object by scanning the collimated luminous flux. Note that a single mirror may be used. However, in a case where the single mirror is used, it is preferable to reciprocate and swing the mirror in a certain angle range. Components other than that are similar to those in the above embodiment.

Next, a distance measuring operation of the laser radar LR according to the present embodiment will be described. Divergent light intermittently emitted in a pulsed manner from the semiconductor laser LD is converted into a parallel light flux by the collimator lens CL, enters a point P1 on the first mirror surface M1 of the rotating mirror unit MU and is reflected at the point P1. Then, the divergent light travels along the rotation axis line RO, is further reflected at a point P2 on the second mirror surface M2, and is scanned and projected toward the object OBJ.

Fig. 7 is diagram of a state where a screen G which is a detection range of the laser radar LR is scanned with the collimated luminous flux LB to be emitted (indicating by hatching) according to the rotation of the mirror unit MU. In combinations of the first mirror surfaces M1 and the second mirror surfaces M2 of the mirror unit MU, the intersection angles are different from each other. The collimated luminous flux LB is sequentially reflected by the first mirror surfaces M1 and the second mirror surfaces M2 which are rotated and moved. First, the collimated luminous flux LB reflected by a first pair of the first mirror surface M1 and the second mirror surface M2 is scanned in an uppermost region Ln1 in the screen G from the left to the right in the horizontal direction according to the rotation of the mirror unit MU. Next, the collimated luminous flux LB reflected by a second pair of the first mirror surface M1 and the second mirror surface M2 is scanned in a second region Ln2 from the top of the screen G from the left to the right in the horizontal direction according to the rotation of the mirror unit MU. Next, the collimated luminous flux LB reflected by a third pair of the first mirror surface M1 and the second mirror surface M2 is scanned in a third region Ln3 from the top of the screen G from the left to the right in the horizontal direction according to the rotation of the mirror unit MU. Next, the collimated luminous flux LB reflected by a fourth pair of the first mirror surface M1 and the second mirror surface is scanned in a lowermost region Ln4 in the screen G from the left to the right in the horizontal direction according to the rotation of the mirror unit MU. With this processing, a scan of one screen is completed. Then, after the mirror unit MU has made one revolution, when the first pair of the first mirror surface M1 and the second mirror surface M2 returns, the uppermost portion of the screen G is scanned again.

In Fig. 6, as indicated by a dotted line, one reflected light flux (first reflected light flux) reflected by the object OBJ of the scanned and projected light fluxes enters a point P3A on the second mirror surface M2 of the mirror unit MU, is reflected at the point P3A, and travels along the rotation axis line Ro. Then, the reflected light flux is further reflected at a point P4A on the first mirror surface M1, is collected by the first lens LS1, and is detected by light receiving units of the first light receiver PD1. At the same time, as indicated by a dotted line, another reflected light flux (second reflected light flux) reflected by the object OBJ enters a point P3B on the second mirror surface M2 of the mirror unit MU, is reflected at the point P3B, and travels along the rotation axis line RO. Then, the reflected light flux is further reflected at a point P4B on the first mirror surface M1, is collected by the second lens LS1, and detected by light receiving units of the second light receiver PD2. Signals generated by receiving the light by the light receiving elements are transmitted from the first light receiver PD1 and the second light receiver PD2 to the control circuit which is not shown. Here, a distance to the object is measured based on a difference between a light emission time of the semiconductor laser LD and light reception times of the first light receiver PD1 and the second light receiver PD2. Accordingly, the object OBJ can be detected in the entire range on the screen G.

Fig. 8 is a perspective view of a laser radar LR including a light projecting and receiving unit according to still another embodiment. Here, the control circuit and the like are omitted. In Fig. 8, the light projecting and receiving unit of the laser radar LR includes a semiconductor laser (light source) LD for emitting a pulse laser beam, a collimator lens (light projecting optical system) CL which converts divergent light from the semiconductor laser LD into a collimated luminous flux, a lens (light receiving optical system) LS which collects a reflected light flux from the scanned and projected object OBJ, a prism (branching part) PR into which the reflected light flux which has passed through the lens LS enters and has a branch surface PR1 as a half mirror, a first light receiver PD1 which receives the reflected light flux (first light flux) which has passed through the branch surface PR1, a second light receiver PD2 which receives the reflected light flux (second light flux) reflected by the branch surface PR1, and a mirror unit MU. The mirror unit MU has a similar structure to that in the embodiment illustrated in Fig. 6. Here, it is assumed that a direction of a rotation axis line RO be a Z direction, an optical axis direction of a semiconductor laser LD be an X direction, and a direction orthogonal to the Z direction and the X direction be an Y direction.

The semiconductor laser LD and the collimator lens CL form a light projecting system LPS, and the lens LS, the prism PR, the first light receiver PD1, and the second light receiver PD2 form a light receiving system RPS. A length of a light flux emitted from the light projecting system LPS in a sub scanning angle direction is longer than that in a scanning angle direction in a measurement range of the object.

The first light receiver PD1 and the second light receiver PD2 have similar structures to those in the embodiment illustrated in Fig. 3. Furthermore, the light receiving elements are arranged so that projected images of at least two light receiving elements of the first light receiver PD1 adjacent to each other have contact with a projected image of the light receiving element of the second light receiver PD2 sandwiched between the projected images of the light receiving elements of the first light receiver PD1 without a gap or the projected images are partially overlapped with each other when the light receiving elements of the first light receiver PD1 are projected on the branch surface PR1 along the first light flux and the light receiving elements of the second light receiver PD2 are projected on the branch surface PR1 along the second light flux (refer to Fig. 3). Furthermore, in a case of where both the projected images are partially overlapped with each other, it is preferable to satisfy the following formula (refer to Fig. 3).

$$L'/H > 0.5 \quad (2)$$

where,

L': overlapping amount of the projected image of the first light receiving element and the projected image of the second light receiving element

H: length of the first light receiving element or the second light receiving element in the first direction Other configurations, including signal processing, are similar to those in the above embodiment.

Next, a distance measuring operation of the laser radar LR according to the present embodiment will be described. Divergent light intermittently emitted in a pulsed manner from the semiconductor laser LD is converted into a parallel light flux by the collimator lens CL, enters a point P1 on the first mirror surface M1 of the rotating mirror unit MU and is reflected at the point P1. Then, the divergent light travels along the rotation axis line RO, is further reflected at a point P2 on the second mirror surface M2, and is scanned and projected toward the object OBJ.

As indicated by a dotted line, the reflected light flux reflected by the object OBJ of the scanned and projected light fluxes enters a point P3 on the second mirror surface M2 of the mirror unit MU, is reflected at the point P3, and travels along the rotation axis line RO. Then, the reflected light flux is further reflected at a point P4 on the first mirror surface M1, is collected by the lens LS. The reflected light flux which has passed through the branch surface PR1 is received by the first light receiver PD1, and the reflected light flux reflected by the branch surface PR1 is received by the second light receiver PD2. Signals generated by receiving the light by the light receiving elements are transmitted from the first light receiver PD1 and the second light receiver PD2 to the control circuit which is not shown. Here, a distance to the object is measured based on a difference between a light emission time of the semiconductor laser LD and light reception times of the first light receiver PD1 and the second light receiver PD2. Similarly to the embodiment illustrated in Fig. 6, by rotating the mirror unit MU, the object OBJ can be detected in the entire range on the screen G.

Hereinafter, results of simulation performed by the present inventors are indicated. As illustrated in Figs. 9 and 13, a first light receiver includes four or more first light receiving elements PX11 to PX14, a second light receiver includes four or more second light receiving elements PX21 and PX24, and the shapes of the light receiving elements are the same. Here, to simplify the description, it is assumed that reflected light beams RB1 and RB2 enter the first light receiving elements PX11 and PX12 and the second light receiving elements PX21 and PX22. First, Fig. 9 is a diagram of an arrangement state of the first light receiving elements PX11 to PX14 and the second light receiving elements PX21 to PX24 according to a comparative example. Specifically, the comparative example has an arrangement relation in which the first light receiving elements PX11 to PX14 and the second light receiving elements PX21 to PX24 are completely overlapped with each other when it is assumed that the light receiving element size in the Z direction (horizontal direction in Fig. 9, the same applies below) be 1.0 and a gap between the light receiving elements in the Z direction be 0.5 and the first light receiving elements PX11 to PX14 and the second light receiving elements PX21 to PX24 are shifted in the Y direction (vertical direction in Fig. 9, the same applies below).

In Fig. 10, sensor sensitivity in the comparative example is a value obtained by adding signals of the first light receiving element PX11 and the second light receiving element PX21 and a value obtained by adding signals of the first light receiving element PX12 and the second light receiving element PX22 according to a reflected light entering position. However, a region having sensor sensitivity of zero (that is, non-detection region) is provided between the light receiving elements (Z coordinate 1.0 to 1.5), and it is found that a detection performance is deteriorated.

Furthermore, in a case where the reflected light RB1 and RB2 as large as the light receiving element size enters as illustrated in Fig. 11(b), changes in the value obtained by adding the signals of the first light receiving element PX11 and the second light receiving element PX21 and the value obtained by adding the signals of the first light receiving element PX12 and the second light receiving element PX22 when the reflected light RB1 and RB2 is displaced in the Z direction are illustrated in Fig. 11(a).

In addition, in a case where the reflected light RB1 and RB2 0.6 times as large as the light receiving element size enters as illustrated in Fig. 12(b), changes in the value obtained by adding the signals of the first light receiving element PX11 and the second light receiving element PX21 and the value obtained by adding the signals of the first light receiving element PX12 and the second light receiving element PX22 when the reflected light RB1 and RB2 is displaced in the Z direction are illustrated in Fig. 12(a).

Next, an example will be described. Fig. 13 is a diagram of an arrangement state of first light receiving elements PX11 to PX14 and second light receiving elements PX21 to PX24 according to the example. Specifically, the example has an arrangement relation in which an overlapping amount is 0.5 when it is assumed that a light receiving element size in the Z direction be 1.0, a gap between the light receiving elements in the Z direction be 0.5, and the first light receiving elements PX11 and PX12 and the second light receiving elements PX21 and PX22 be shifted in the Y direction (that is, second light receiving elements are shifted by 0.5 in Z direction relative to first light receiving elements).

In Fig. 14, according to a reflected light entering position, sensor sensitivity in the example changes as a signal value of only the first light receiving element PX11, a value obtained by adding signals of the first light receiving element PX11 and the second light receiving element PX21, a signal value of only the second light receiving element PX21, a signal value of only the first light receiving element PX12, a value obtained by adding signals of the first light receiving element PX12 and the second light receiving element PX22, and a signal value of only the second light receiving element PX22 in stages. However, in comparison with the comparative example, the non-detection region between the light receiving elements is not provided, and it can be found that the detection performance is improved.

In addition, in a case where the reflected light RB1 and RB2 as large as the light receiving element size enters as illustrated in Fig. 15(b), changes in the value obtained by adding the signals of the first light receiving element PX11 and the second light receiving element PX21 and the value obtained by adding the signal of the first light receiving element PX12 and the second light receiving element PX22 when the reflected light RB1 and RB2 is displaced in the Z direction are illustrated in Fig. 15(a). In comparison with the comparative example, a region (position of image) where detection can be performed with higher sensitivity than that in a case where detection is performed without addition is enlarged. For example, in a region where the sensitivity exceeds that in a case of a same-size object without addition (corresponding to added value of 1.0), the value is 0.5 in a case of the comparative example (A in Fig. 11). Whereas, it can be found that the value is improved to about 0.75 in the example (B in Fig. 15).

In addition, in a case where the reflected light RB1 and RB2 0.6 times as large as the light receiving element size enters as illustrated in Fig. 16(b), changes in the value obtained by adding the signals of the first light receiving element PX11 and the second light receiving element PX21 and the value obtained by adding the signals of the first light receiving element PX12 and the second light receiving element PX22 when the reflected light RB1 and RB2 is displaced in the Z direction are illustrated in Fig. 16(a). In comparison with the comparative example, a region (position of image) where detection can be performed with higher sensitivity than that in a case where detection is performed without addition is enlarged. For example, in a region where the sensitivity exceeds that in a case of a 0.6-times-sized object without addition (corresponding to added value of 0.6), the value is 0.7 in a case of the comparative example (C in Fig. 12). Whereas, it can be found that the value is improved to about 0.9 in the example (D in Fig. 16).

It is apparent to those skilled in the art in this field based on the embodiment and the technical ideas described herein that the present invention is not limited to the embodiment and the example described herein and includes other embodiments and other examples. The description, the embodiment, the example described herein are only exemplary, and the scope of the present invention is indicated by the following claims. For example, contents of the present invention described with reference to the drawings can be applied to all the embodiments. The laser radar can be applied not only to automobiles but also to aircrafts, robots, monitoring cameras, and the like.

Reference Signs List

1 vehicle

| | |
|---|---|
| 1a | front window |
| 1b | front grill |
| CL | collimator lens |
| CONT | control circuit |
| CP1, CP2 | arrangement center |
| CS | casing |
| G | screen |
| HS | wiring |
| LB | collimated luminous flux |
| LD | semiconductor laser |
| Ln1 to LN4 | region |
| LR | laser radar |
| LS | lens |
| LS1 | first lens |
| LS2 | second lens |
| M1 | first mirror surface |
| M2 | second mirror surface |
| MT | motor |
| MU | mirror unit |
| OA1 | optical axis |
| OA2 | optical axis |
| OBJ | object |
| PD1 | first light receiver |
| PD2 | second light receiver |
| PR | prism |
| PR1 | branch surface |
| PX11 to PX14 | first light receiving element |
| PX21 to PX24 | second light receiving element |
| RB1 | first reflected light flux |
| RB2 | second reflected light flux |
| RO | rotation axis line |
| RPS | light receiving system |
| SFT | rotation shaft |

**Claims**

1. A light projecting and receiving unit comprising:

   a light source;
   a light projecting optical system that emits a light flux emitted from the light source toward an object;
   a scanning mechanism that drives the light projecting optical system and scans the light flux emitted from the light projecting optical system;
   a first light receiver that receives a first reflected light flux which is the light flux reflected by the object; and
   a second light receiver that receives a second reflected light flux reflected from the object concurrently to the first reflected light flux, wherein the first light receiver and the second light receiver are arranged apart from each other in a second direction corresponding to a direction in which the light flux emitted from the light projecting optical system is scanned,
   the first light receiver includes a plurality of first light receiving elements arranged along a first direction orthogonal to the second direction with intervals,
   the second light receiver includes a plurality of second light receiving elements arranged along the first direction with intervals, and
   the first light receiving elements and the second light receiving elements, which are arranged so that a part of the first light receiving elements is overlapped with the part of the second light receiving elements when the first light receiving elements are relatively shifted to the second direction relative to the second light receiving elements, are associated with each other, and the object is detected based on a total value obtained by adding signals respectively output from the first light receiving elements and the second light receiving elements associated with each other.

2. The light projecting and receiving unit according to claim 1, wherein an arrangement center of the first light receiving elements is shifted to a side apart from the second light receiving elements relative to a center of the first light receiving optical system.

**3.** The light projecting and receiving unit according to claim 1 or 2, wherein the following formula is satisfied in a case where the first light receiving elements and the second light receiving elements are partially overlapped with each other when the first light receiving elements are relatively shifted to the second direction relative to the second light receiving elements so as to be overlapped with the second light receiving elements,
$L/H > 0.5$ (1) where,
L: overlapping amount of the first light receiving element and the second light receiving element in the first direction
H: length of the first light receiving element or the second light receiving element in the first direction.

**4.** The light projecting and receiving unit according to any one of claims 1 to 3, further comprising: a processor that processes a signal from the first light receiver and a signal from the second light receiver, wherein the processor determines that the reflected light from the object enters when the total value exceeds a first threshold.

**5.** The light projecting and receiving unit according to claim 4, wherein, when it is assumed that the first light receiving elements and the second light receiving elements having a relation, in which the first light receiving elements and the second light receiving elements are not overlapped with each other when the first light receiving elements are relatively shifted in the second direction relative to the second light receiving elements, be independent light receiving elements, the processor determines that the reflected light from the object enters when a signal from the independent light receiving element exceeds a second threshold.

**6.** The light projecting and receiving unit according to claim 5, wherein the first threshold is different from the second threshold.

**7.** The light projecting and receiving unit according to any one of claims 1 to 6, wherein the scanning mechanism scans the object by integrally rotating the light source, the light projecting optical system, the first light receiver, and the second light receiver around an axis along the second direction.

**8.** The light projecting and receiving unit according to any one of claims 1 to 6, wherein the scanning mechanism includes a mirror which reflects the light flux traveling from the light projecting optical system toward the object and reflects the first reflected light flux and the second reflected light flux from the object to make the first reflected light flux and the second reflected light flux respectively enter the first light receiver and the second light receiver, and the mirror integrally rotates around an axis along the second direction so as to scan the object.

**9.** A light projecting and receiving unit comprising:

a light source;
a light projecting optical system that emits a light flux emitted from the light source toward an object;
a scanning mechanism that drives the light projecting optical system and scans the light flux emitted from light projecting optical system;
a light receiving optical system into which a reflected light flux which is a light flux reflected from the object enters;
a branching part including a branch surface which transmits a part of the reflected light flux collected by the light receiving optical system as a first light flux and reflects the remaining reflected light flux as a second light flux;
a first light receiver that receives the first light flux; and
a second light receiver that receives the second light flux, wherein
the first light receiver includes a plurality of first light receiving elements arranged along a first direction orthogonal to a second direction corresponding to a direction in which the light flux emitted from the light projecting optical system is scanned with intervals,
the second light receiver includes a plurality of second light receiving elements arranged along the first direction with intervals,
the first light receiving element and the second light receiving element, which are arranged so that a part of a projected image of the first light receiving element is overlapped with a part of a projected image of the second light receiving element when the first light receiving element is projected on the branch surface along the first light flux and the second light receiving element is projected on the branch surface along the second light flux, are associated with each other, and the object is detected based on a total value obtained by adding signals respectively output from the first light receiving element and the second light receiving element associated with each other.

**10.** The light projecting and receiving unit according to claim 9, wherein the scanning mechanism includes a mirror which reflects the light flux emitted from the light projecting optical system and makes the light flux travel toward the object or reflects the reflected light flux returned from the object and makes the light flux enter the light receiving optical system, and the object is scanned by rotating the mirror around an axis perpendicular to a direction in which the light flux emitted from the light projecting optical system is scanned.

**11.** The light projecting and receiving unit according to claim 9 or 10, wherein
the following formula is satisfied in a case where the projected image of the first light receiving element and the projected image of the second light receiving element are partially overlapped with each other when the projected image of the first light receiving element is overlapped with the projected image of the second light receiving element,
$L'/H > 0.5$ (2) where,
L': overlapping amount of the projected image of the first light receiving element and the projected image of the second light receiving element
H: length of the first light receiving element or the second light receiving element in the first direction.

**12.** The light projecting and receiving unit according to any one of claims 9 to 11, further comprising: a processor that processes a signal from the first light receiver and a signal from the second light receiver, wherein the processor determines that the reflected light from the object enters when the total value exceeds a first threshold.

**13.** The light projecting and receiving unit according to claim 12, wherein, when it is assumed that the first light receiving element and the second light receiving element having a relation, in which the projected image of the first light receiving element is not overlapped with the projected image of the second light receiving element, be independent light receiving elements, the processor determines that the reflected light from the object enters when a signal from the independent light receiving element exceeds a second threshold.

**14.** The light projecting and receiving unit according to claim 13, wherein the first threshold is different from the second threshold.

**15.** The light projecting and receiving unit according to any one of claims 1 to 14, wherein the first light receiving elements have the same shape, and the second light receiving elements have the same shape.

**16.** The light projecting and receiving unit according to claim 15, wherein the first light receiving elements and the second light receiving elements have the same shape.

**17.** The light projecting and receiving unit according to claim 15, wherein the first light receiving elements and the second light receiving elements have different shapes from each other.

**18.** The light projecting and receiving unit according to any one of claims 1 to 17, wherein an optical axis of the light projecting optical system is parallel to an optical axis of the light receiving optical system.

**19.** A radar comprising: the light projecting and receiving unit according to any one of claims 1 to 18, wherein the radar measures a distance to the object based on a difference between a time when the light flux is emitted from the light source and times when the first light receiver and the second light receiver receive the reflected light flux.

FIG. 1

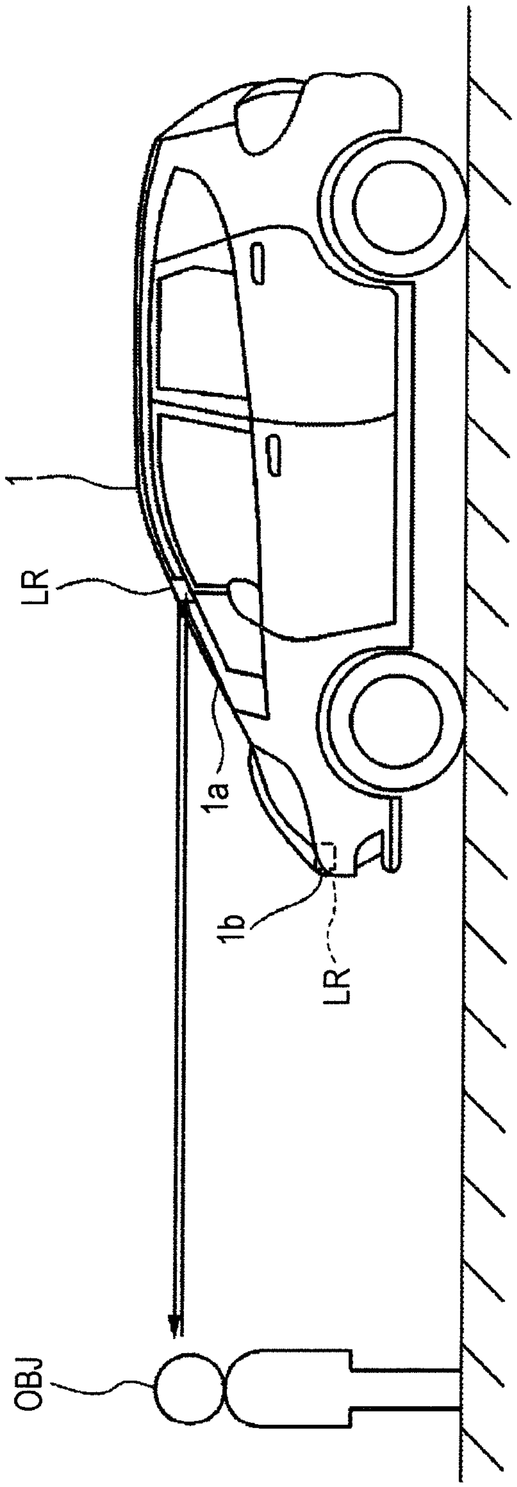

FIG. 2

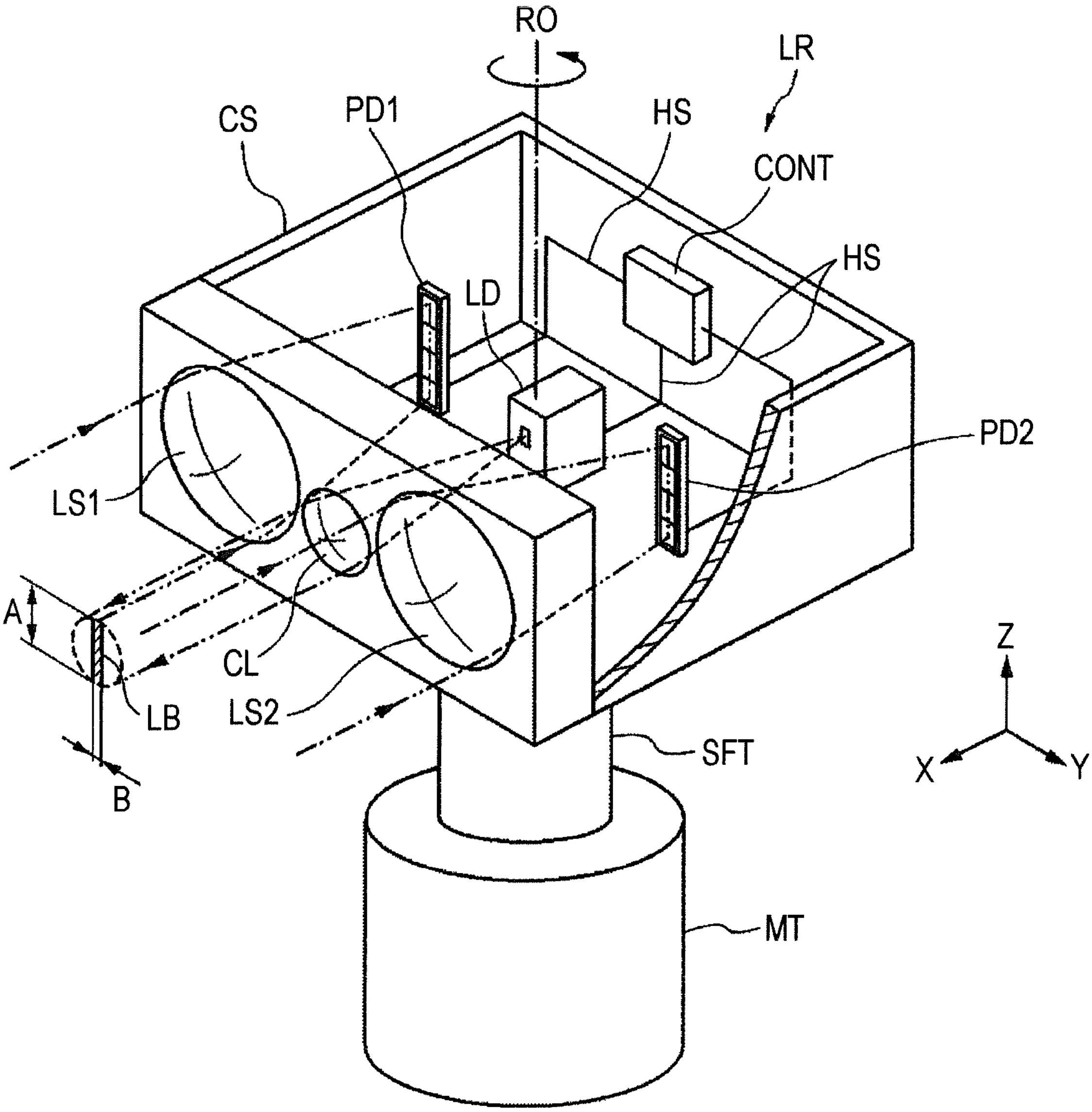

*FIG. 3*

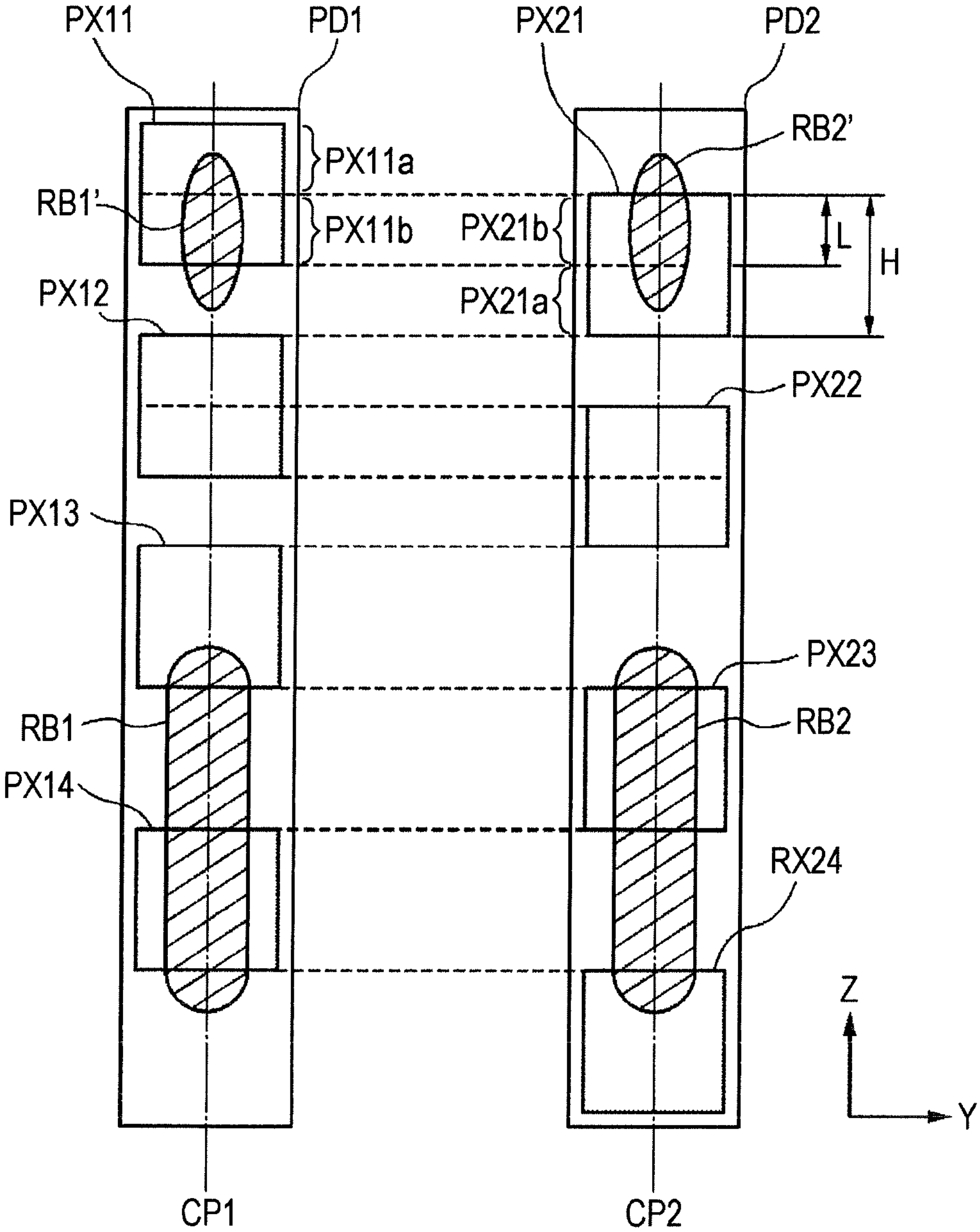
PX11
PD1
PX21
PD2
RB2'
PX11a
RB1'
PX11b
PX21b
L
H
PX12
PX21a
PX22
PX13
PX23
RB1
RB2
PX14
RX24
Z
Y
CP1
CP2

FIG. 4

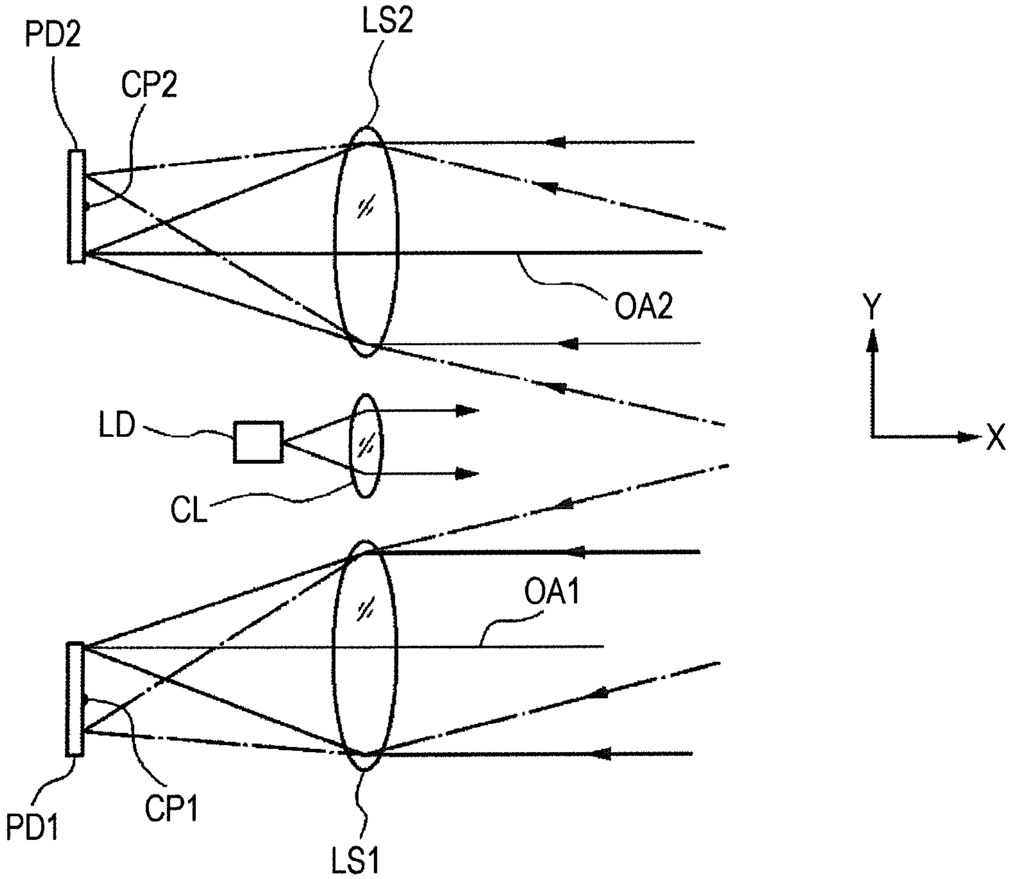

FIG. 5

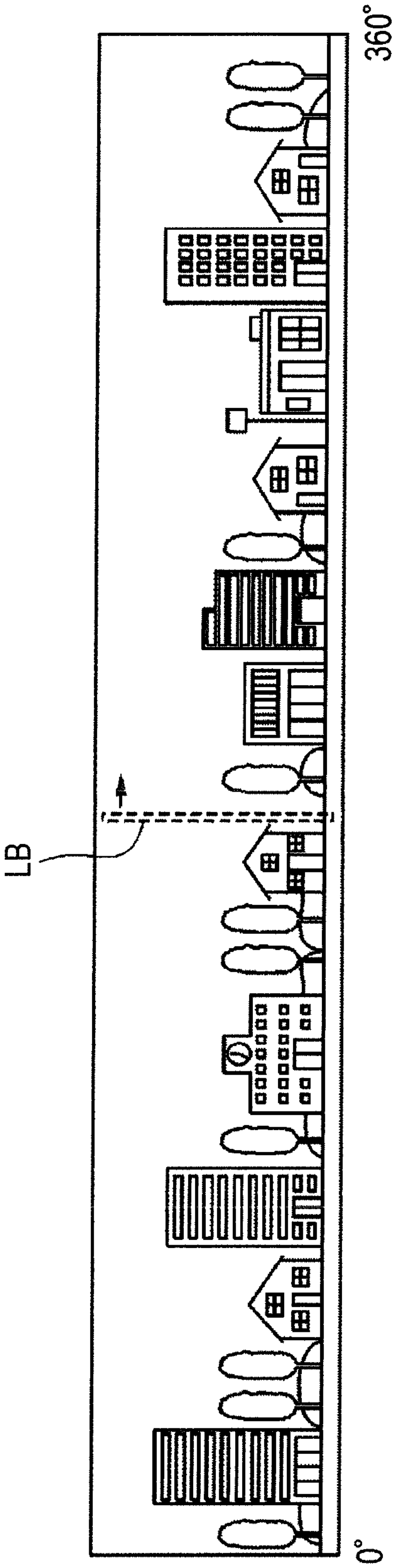

FIG. 6

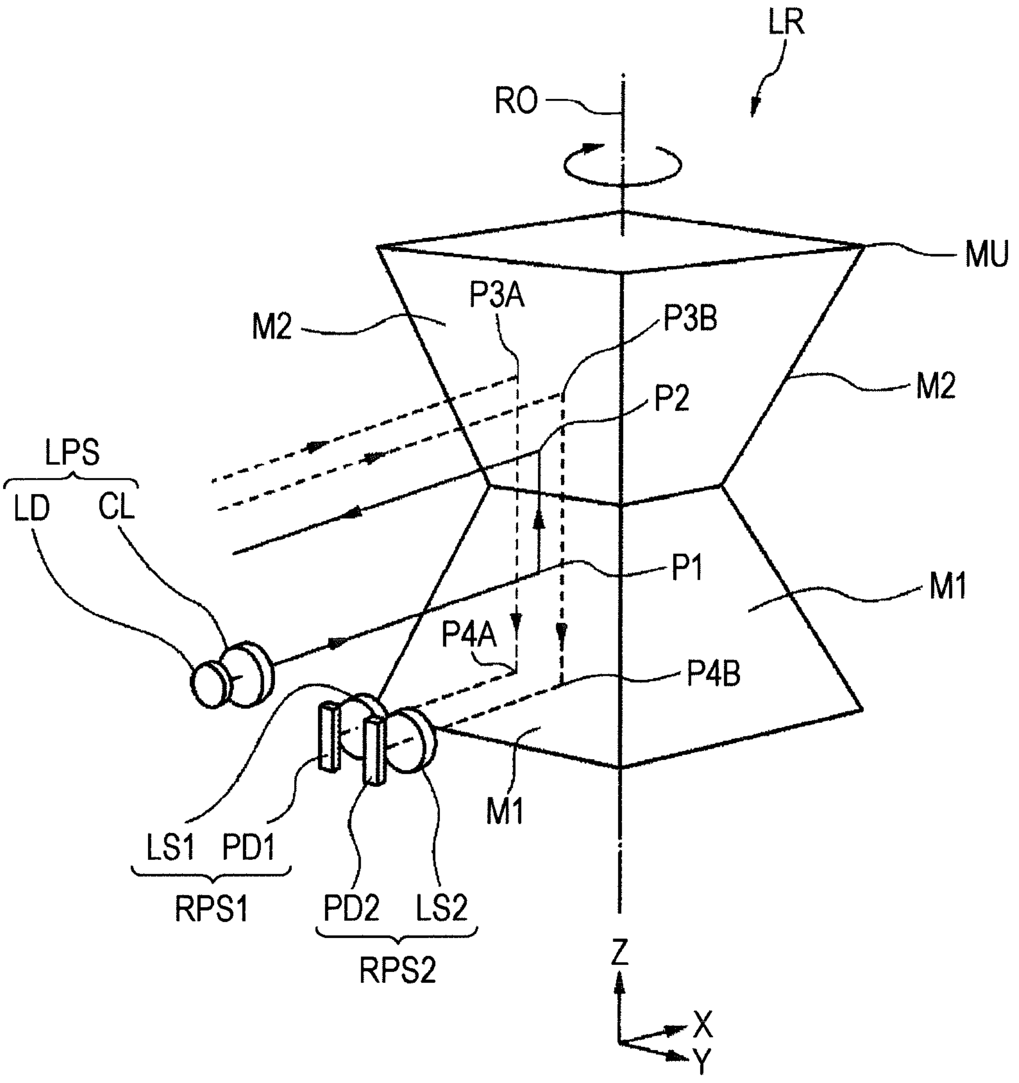
LR
RO
MU
M2
P3A
P3B
M2
P2
LPS
LD
CL
P1
M1
P4A
P4B
M1
LS1
PD1
RPS1
PD2
LS2
RPS2
Z
X
Y

FIG. 7

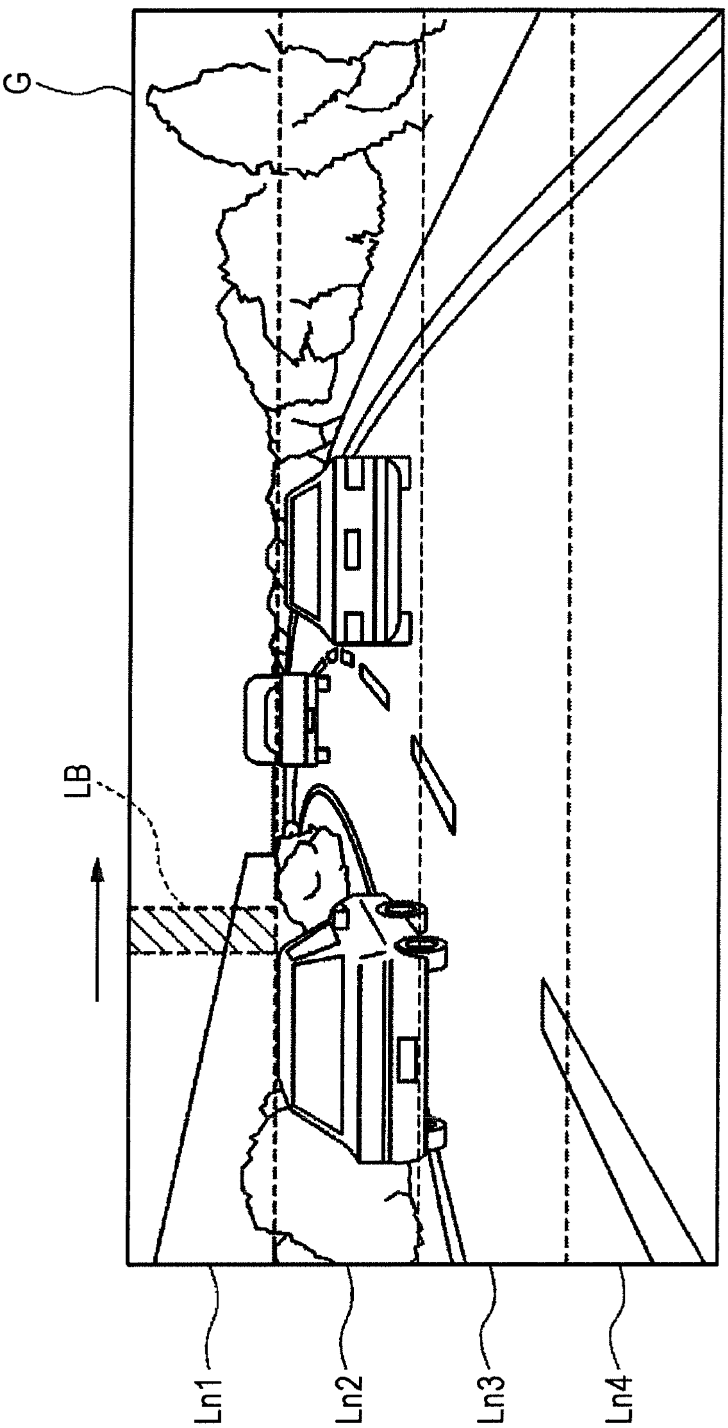

FIG. 8

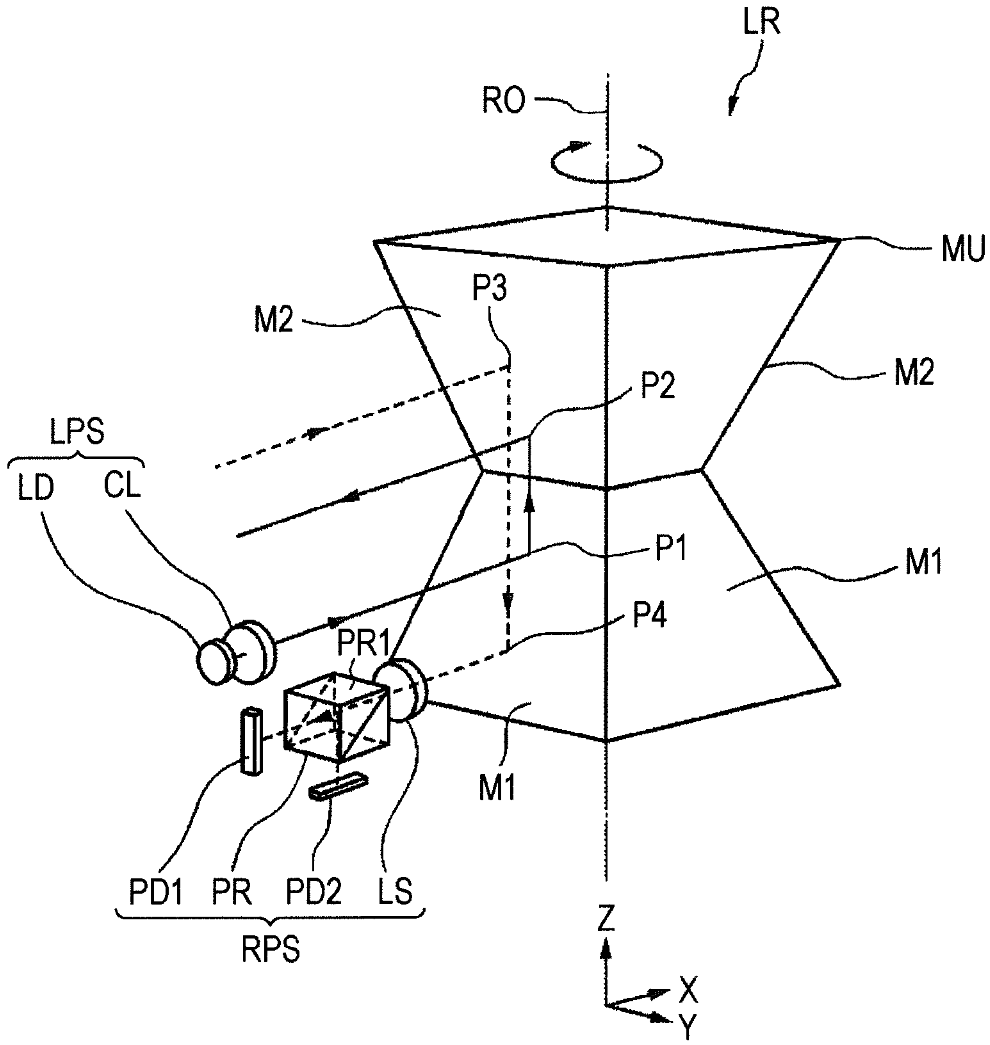

FIG. 9

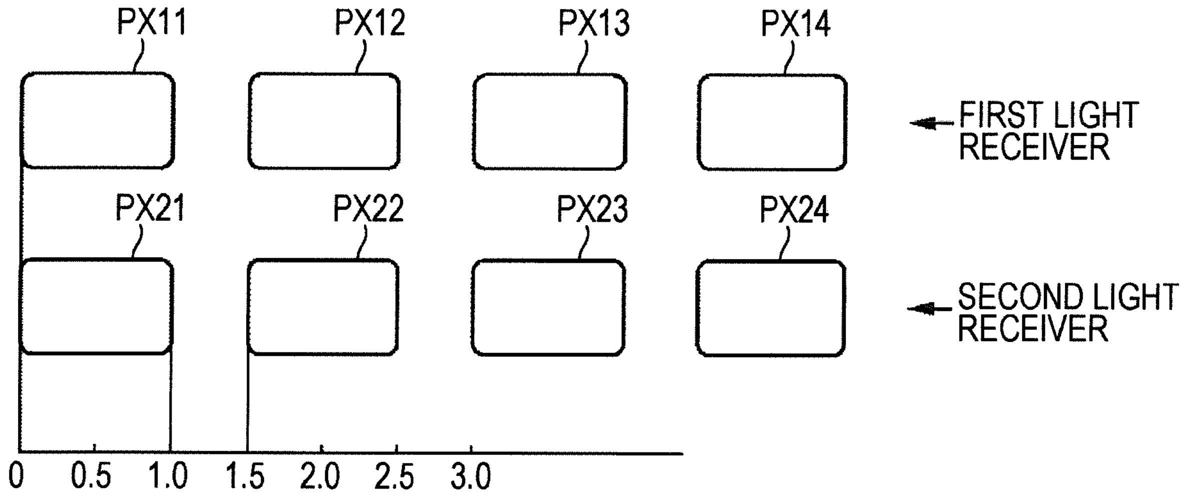
PX11
PX12
PX13
PX14
FIRST LIGHT RECEIVER
PX21
PX22
PX23
PX24
SECOND LIGHT RECEIVER
0
0.5
1.0
1.5
2.0
2.5
3.0

FIG. 10

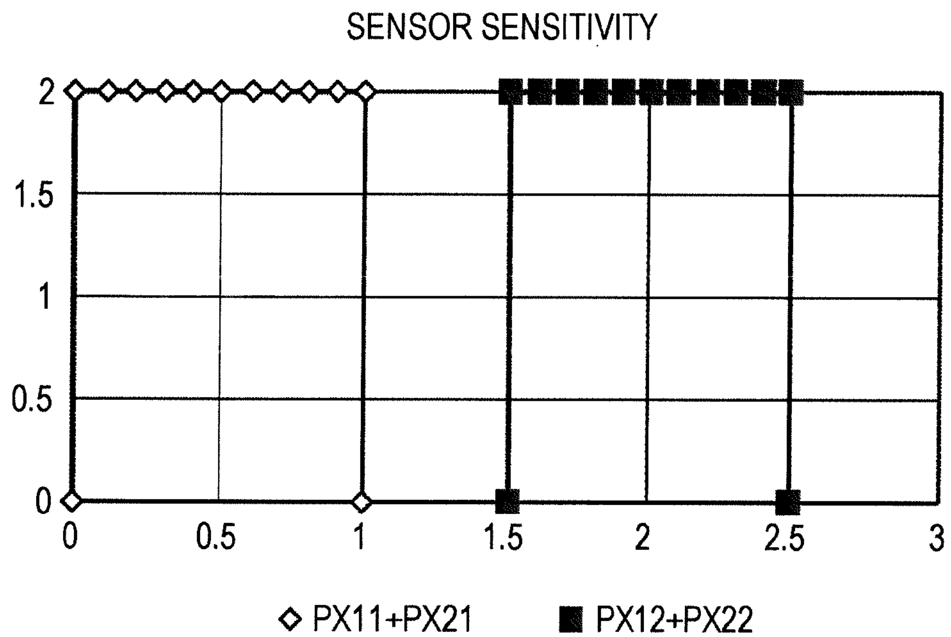
SENSOR SENSITIVITY
2
1.5
1
0.5
0
0
0.5
1
1.5
2
2.5
3
PX11+PX21
PX12+PX22

# FIG. 11

(a)

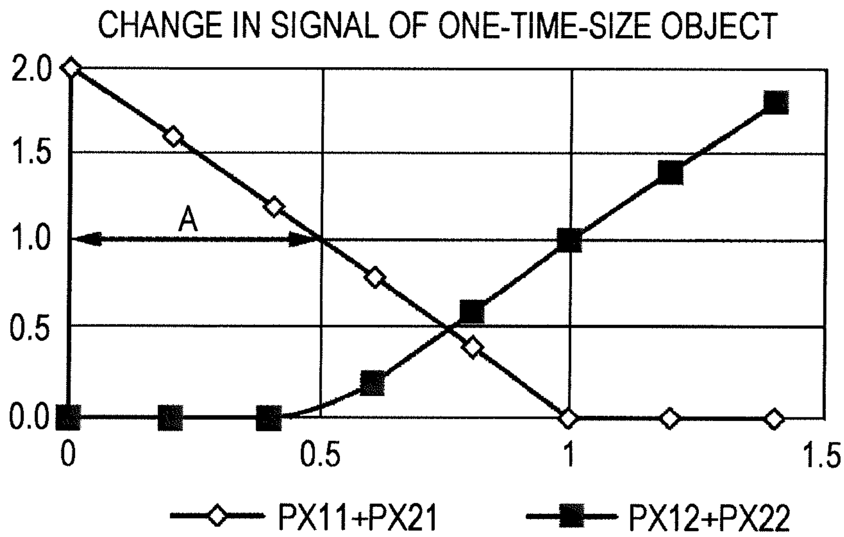
CHANGE IN SIGNAL OF ONE-TIME-SIZE OBJECT
2.0
1.5
1.0
0.5
0.0
A
0
0.5
1
1.5
PX11+PX21
PX12+PX22

(b)

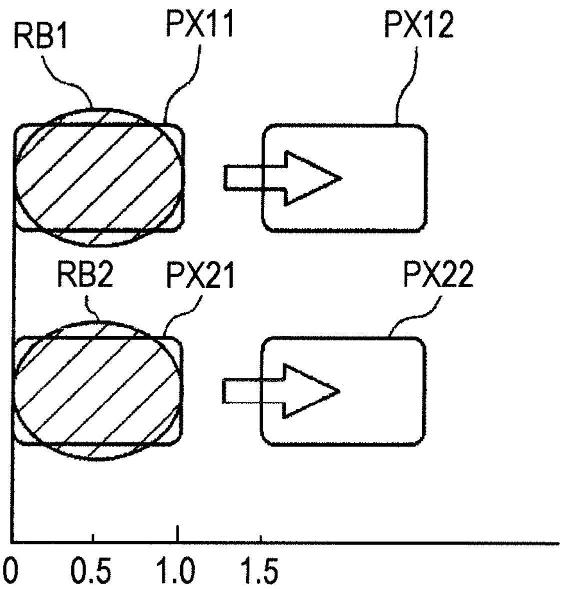
RB1
PX11
PX12
RB2
PX21
PX22
0
0.5
1.0
1.5

FIG. 12

(a)

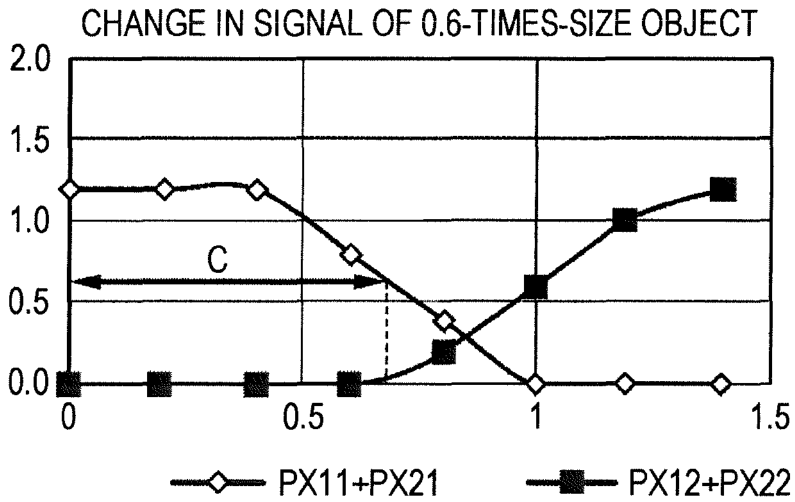
CHANGE IN SIGNAL OF 0.6-TIMES-SIZE OBJECT
2.0
1.5
1.0
0.5
0.0
0
0.5
1
1.5
C
PX11+PX21
PX12+PX22

(b)

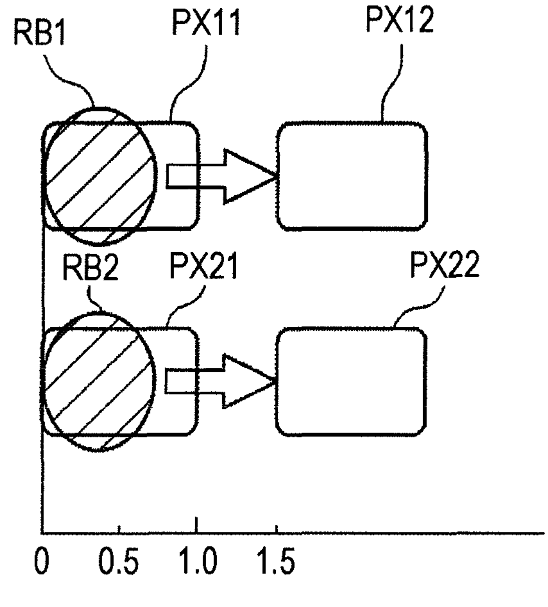
RB1
PX11
PX12
RB2
PX21
PX22
0
0.5
1.0
1.5

*FIG. 13*

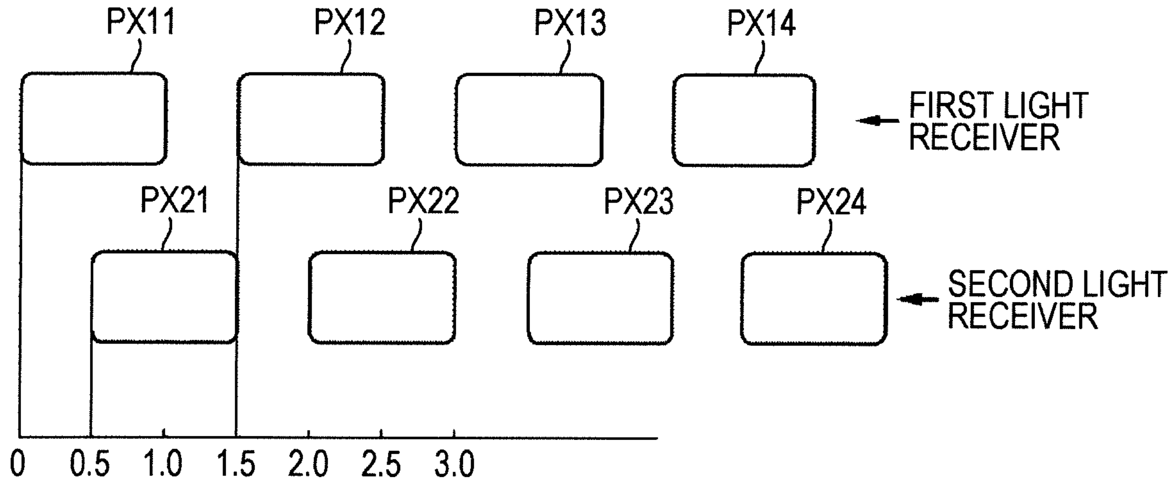
PX11
PX12
PX13
PX14
FIRST LIGHT RECEIVER
PX21
PX22
PX23
PX24
SECOND LIGHT RECEIVER
0
0.5
1.0
1.5
2.0
2.5
3.0

*FIG. 14*

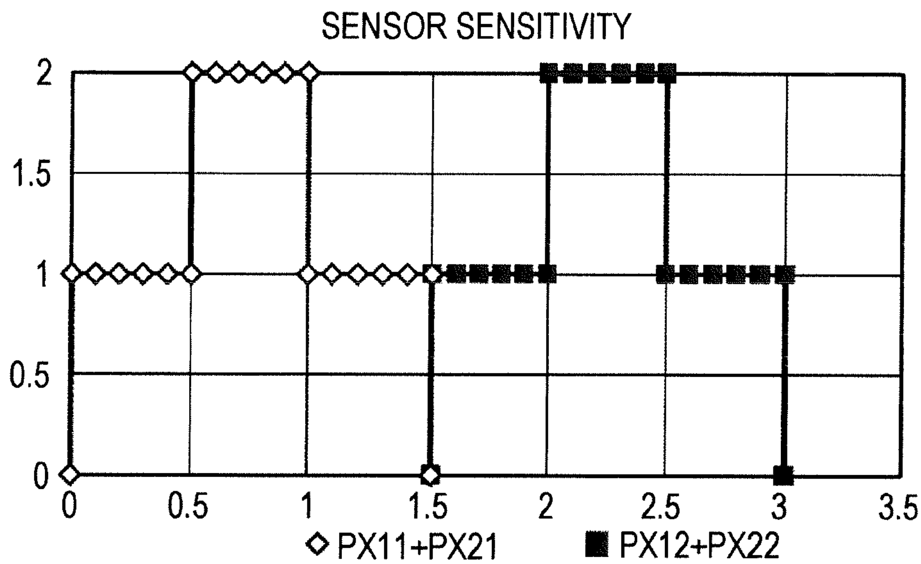
SENSOR SENSITIVITY
2
1.5
1
0.5
0
0
0.5
1
1.5
2
2.5
3
3.5
PX11+PX21
PX12+PX22

FIG. 15

(a)

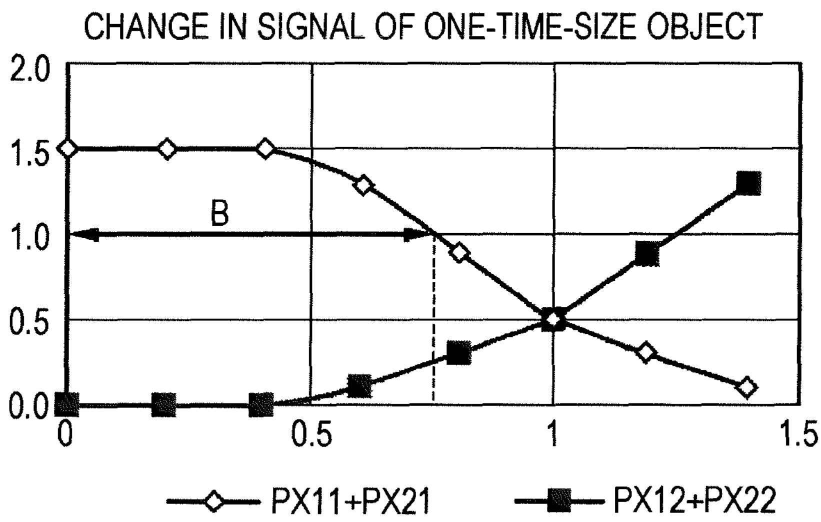
CHANGE IN SIGNAL OF ONE-TIME-SIZE OBJECT
2.0
1.5
1.0
0.5
0.0
0
0.5
1
1.5
B
PX11+PX21
PX12+PX22

(b)

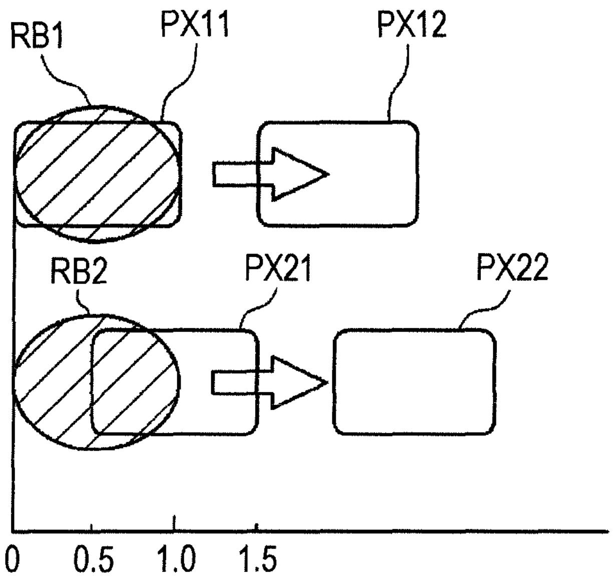
RB1
PX11
PX12
RB2
PX21
PX22
0
0.5
1.0
1.5

# FIG. 16

(a)

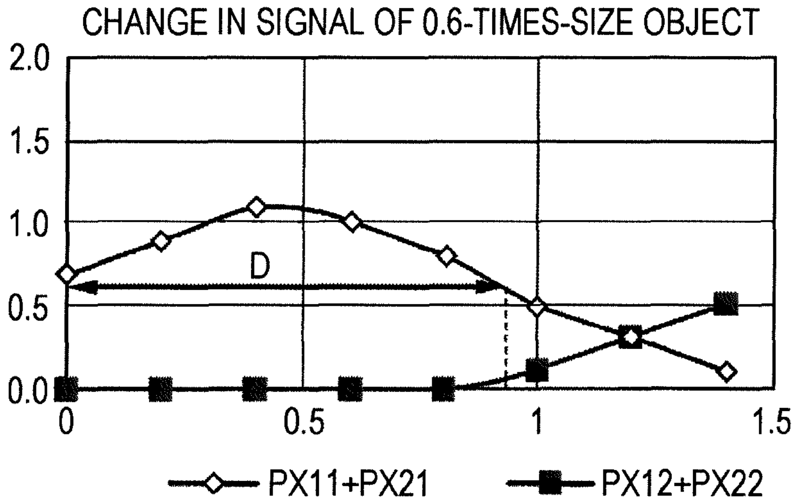
CHANGE IN SIGNAL OF 0.6-TIMES-SIZE OBJECT
2.0
1.5
1.0
0.5
0.0
D
0
0.5
1
1.5
PX11+PX21
PX12+PX22

(b)

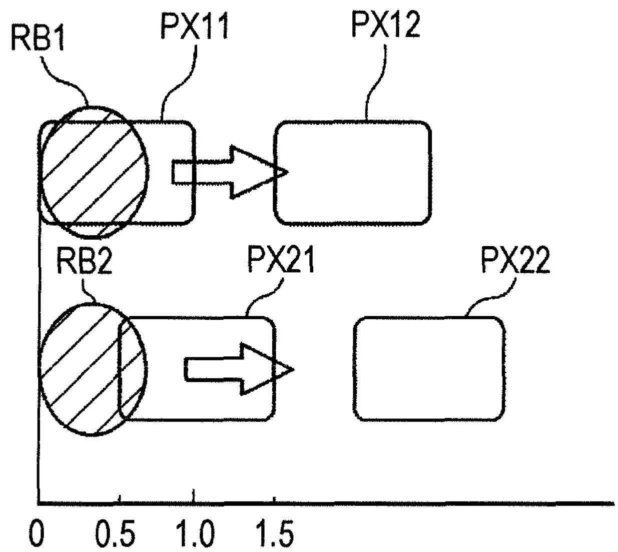
RB1
PX11
PX12
RB2
PX21
PX22
0
0.5
1.0
1.5

**INTERNATIONAL SEARCH REPORT**

International application No.
PCT/JP2016/086979

A. CLASSIFICATION OF SUBJECT MATTER
*G01S7/481*(2006.01)i, *G01S17/89*(2006.01)i

According to International Patent Classification (IPC) or to both national classification and IPC

B. FIELDS SEARCHED

Minimum documentation searched (classification system followed by classification symbols)
G01S7/48-G01S7/51, G01S17/00-G01S17/95

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | US 5270780 A (MORAN,S.E.), 14 December 1993 (14.12.1993), column 1, lines 13 to 23; column 13, lines 25 to 44, 62 to 68; column 14, lines 23 to 29; column 18, lines 47 to 56; fig. 3 to 5 | 1-8,15-19 |
| Y | JP 63-284980 A (Fujitsu Ltd.), 22 November 1988 (22.11.1988), fig. 6 | 1-8,15-19 |
| A | WO 2012/085152 A1 (BOROWSKI,A.), 28 June 2012 (28.06.2012), [00152] to [00156], [00159], [00178]; fig. 7 | 9-14 |
| Y | US 8836922 B1 (PENNECOT,G.), 16 September 2014 (16.09.2014), fig. 2 | 7 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 January 2017 (16.01.17) | 24 January 2017 (24.01.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/086979

C (Continuation). DOCUMENTS CONSIDERED TO BE RELEVANT

| Category* | Citation of document, with indication, where appropriate, of the relevant passages | Relevant to claim No. |
|---|---|---|
| A | US 5874733 A (SILVER,A.G.), 23 February 1999 (23.02.1999), fig. 1; column 5, lines 32 to 53 | 9 |
| A | JP 2015-154411 A (Ricoh Co., Ltd.), 24 August 2015 (24.08.2015), fig. 8 | 9 |

Form PCT/ISA/210 (continuation of second sheet) (January 2015)

**INTERNATIONAL SEARCH REPORT**
Information on patent family members

International application No.
PCT/JP2016/086979

| | | | |
|---|---|---|---|
| US 5270780 A | 1993.12.14 | (Family: none) | |
| JP 63-284980 A | 1988.11.22 | (Family: none) | |
| WO 2012/085152 A1 | 2012.06.28 | US 2013/0300840 A1 | 2013.11.14 |
| | | EP 2469295 A1 | 2012.06.27 |
| | | EP 2656100 B1 | 2016.10.19 |
| US 8836922 B1 | 2014.09.16 | JP 2016-534346 A | 2016.11.04 |
| | | US 2015/0055117 A1 | 2015.02.26 |
| | | WO 2015/026471 A1 | 2015.02.26 |
| | | KR 10-2016-0043109 A | 2016.04.20 |
| | | CN 105659108 A | 2016.06.08 |
| US 5874733 A | 1999.02.23 | (Family: none) | |
| JP 2015-154411 A | 2015.08.24 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015078953 A
- US 7969558 B